# EUROPÄISCHE PATENTSCHRIFT

(11) **EP 3 077 654 B1**
(45) Veröffentlichungstag und Bekanntmachung des Hinweises auf die Patenterteilung: **14.02.2018**
(21) Anmeldenummer: 15744609.7
(22) Anmeldetag: 05.08.2015
(51) Int. Cl.: F02M 25/00, F02M 25/08, F04B 39/10, F16K 11/085

(54) **VENTILEINHEIT MIT SPÜLLUFTPUMPE**
VALVE UNIT WITH PURGE AIR PUMP
UNITÉ SOUPAPE COMPORTANT UNE POMPE À AIR DE PURGE

(30) Priorität: 19.08.2014 DE 102014216454
(43) Veröffentlichungstag der Anmeldung: 12.10.2016
(73) Patentinhaber: Continental Automotive GmbH, 30165 Hannover (DE)
(72) Erfinder: WEIGL, Manfred, 93161 Sinzing (DE); GRASS, Philippe, 93053 Regensburg (DE)
(86) Internationale Anmeldenummer: PCT/EP2015/068010
(87) Internationale Veröffentlichungsnummer: WO 2016/026696

(56) Entgegenhaltungen:
- CN-A- 102 966 763
- DE-A1-102010 064 239
- US-A1- 2004 060 343
- US-A1- 2005 257 780

## Beschreibung

Die Erfindung betrifft eine Ventileinheit mit Spülluftpumpe zur Verwendung im Kraftstofftanksystem eines Verbrennungsmotors. DE 10 2010 064 239 A1 offenbart eine Ventileinheit mit einer Spülluftpumpe und zwei Verstellelementen.

Zur Verringerung der von Kraftfahrzeugen ausgehenden Schadstoffemissionen wurden in den vergangenen Jahrzehnten zahlreiche Maßnahmen eingeführt. Eine dieser Maßnahmen besteht darin, ein Kraftstofftanksystem einzusetzen, bei dem ein Kraftstofftank mit einem Speicherelement zur temporären Speicherung von Kohlenwasserstoffen verbunden ist. Bei der Betankung von Kraftfahrzeugen mit auf Kohlenwasserstoffen basierenden Kraftstoffen kommt es zum Ausgasen von Kohlenwasserstoffen aus dem Kraftstoff, wobei die Kohlenwasserstoffe nicht in die Atmosphäre gelangen sollen. Auch bei hohen Temperaturen oder Fahrten über unebene Untergründe kommt es verstärkt zu Ausgasungen von Kohlenwasserstoffen aus dem Kraftstoff, wobei effektiv dafür gesorgt werden muss, dass diese Kohlenwasserstoffe nicht in die Atmosphäre entweichen. Insbesondere bei Hybridfahrzeugen, bei denen der Verbrennungsmotor über weite Fahrstrecken vollständig still steht, müssen die ausgegasten Kohlenwasserstoffe effektiv zwischengespeichert werden, um später bei einem erneuten Starten des Verbrennungsmotors verbrannt zu werden. Hierzu haben sich Kraftstofftanksysteme bewährt, die aus einem Kraftstofftank und einem Speicherelement zur temporären Speicherung von Kohlenwasserstoffen bestehen, wobei der Kraftstofftank und das Speicherelement derart miteinander verbunden sind, dass die Kohlenwasserstoffe, die aus einem im Kraftstofftank befindlichen Kraftstoff ausgasen, in dem Speicherelement eingespeichert werden, wobei das Speicherelement mit einer ersten Leitung verbunden ist, durch die Frischluft zu dem Speicherelement förderbar ist, und das Speicherelement mit einer zweiten Leitung verbunden ist, die das Speicherelement mit einem Ansaugstrang des Verbrennungsmotors verbindet und durch die mit Kohlenwasserstoffen angereicherten Frischluft aus dem Speicherelement zu dem Ansaugstrang förderbar ist. Auf diese Art und Weise kann das Speicherelement zyklisch mit Frischluft gespült werden, und die eingespeicherten Kohlenwasserstoffe können einem Ansaugstrang zugeführt werden, der den Verbrennungsmotor mit dem Luftfilter verbindet und der den Verbrennungsmotor mit Luft zur Verbrennung versorgt. Damit können die aus dem Kraftstofftank ausgegasten Kohlenwasserstoffe in dem Verbrennungsmotor verbrannt werden, und ein Entweichen der Kohlenwasserstoffe in die Atmosphäre wird sicher verhindert. Zur Förderung der Kohlenwasserstoffe aus dem Speicherelement zum Ansaugstrang wird nach dem Stand der Technik eine Spülluftpumpe eingesetzt, die zum Beispiel als Radialpumpe ausgebildet sein kann. Um eine fehlerfreie Funktion des Kraftstofftanksystems zu gewährleisten, ist es notwendig, die Dichtheit des gesamten Kraftstofftanksystems regelmäßig zu überprüfen. Diese Dichtheitsüberprüfung kann nicht auf Werkstattaufenthalte des Kraftfahrzeuges beschränkt werden, sondern die Dichtheitsüberprüfung muss im Fahrzeug, also On Board, im Rahmen des gesamten Fahrbetriebes des Kraftfahrzeuges erfolgen.

Eine Aufgabe der vorliegenden Erfindung ist es daher, eine kostengünstige Ventileinheit mit Spülluftpumpe anzugeben, die derart ausgebildet ist, dass die Dichtheit eines Kraftstofftanksystems regelmäßig während des Fahrbetriebes des Kraftfahrzeuges überprüft werden kann.

Die Aufgabe wird durch ein Kraftstofftanksystem nach dem unabhängigen Vorrichtungsanspruch gelöst.

Dadurch, dass die Ventileinheit einen Ventilzylinder aufweist, der drehbar um seine Rotationsachse in der Ventileinheit gelagert ist, wobei die Ventileinheit dazu ausgebildet ist, derart mit der Spülluftpumpe verbunden zu werden, dass in einer ersten Stellung des Ventilzylinders ein erster Ventilzylinderdurchgang die Druckseite der Spülluftpumpe mit einer zum Verbrennungsmotor führenden ersten Leitung verbindet, und ein zweiter Ventilzylinderdurchgang die Saugseite der Spülluftpumpe mit einer über das Speicherelement hin zum Kraftstofftank führenden zweiten Leitung verbindet, und dass in einer zweiten Stellung des Ventilzylinders ein dritter Ventilzylinderdurchgang die Druckseite der Spülluftpumpe mit einer zweiten Leitung verbindet, und ein vierter Ventilzylinderdurchgang die Saugseite der Spülluftpumpe mit einer ersten Leitung verbindet, kann eine einzige Pumpe sowohl zur Spülung des Speicherelementes im Kraftstoffsystem als auch zur Prüfung der Dichtheit des Kraftstoffsystems eingesetzt werden.

Wenn in einer dritten Stellung des Ventilzylinders der Ventilzylinder die Saugseite und die Druckseite der Spülluftpumpe von der ersten Leitung und/oder der zweiten Leitung trennt, kann die Ventileinheit zusätzlich zu den zuvor genannten Funktionen auch noch als Absperrventil eingesetzt werden.

Bei einer Weiterbildung weist der Ventilzylinder einen fünften Ventilzylinderdurchgang und einen sechsten Ventilzylinderdurchgang auf, wobei die Querschnitte des fünften Ventilzylinderdurchgangs und des sechsten Ventilzylinderdurchgangs kleiner als die Querschnitte des ersten Ventilzylinderdurchgangs und des zweiten Ventilzylinderdurchgangs sind. Wenn in einer vierten Stellung des Ventilzylinders der fünfte Ventilzylinderdurchgang die Druckseite der Spülluftpumpe mit der ersten Leitung verbindet, und ein sechste Ventilzylinderdurchgang die Saugseite der Spülluftpumpe mit der zweiten Leitung verbindet, kann eine sehr sanfte Spülung des Speicherelementes erfolgen. Durch die geringen Volumenströme der Frischluft, die gut mit der Spülluftpumpe geregelt werden können, können die Kohlenwasserstoffe sehr gleichmäßig aus dem Speicherelement gelöst werden, womit sichergestellt werden kann, dass ein optimales Luft-Kraftstoffgemisch in den Brennräumen des Verbrennungsmotors mit Hilfe der Lambda Regelung eingestellt werden kann, obwohl zusätzliche Kohlenwasserstoffe durch die Spülung des Speicherelementes in die Brennkammern gelangen.

Bei einer Weiterbildung ist die Spülluftpumpe als Radialpumpe ausgebildet. Eine Radialpumpe weist einen gut reproduzierbaren Zusammenhang zwischen dem Druck, den sie erzeugt, und der Drehzahl, mit der sie angetrieben wird, bzw. mit der Leistung, die sie aufnimmt, auf, wenn die physikalischen Parameter, zum Beispiel die Temperatur, der geförderten Luft bekannt sind. Damit kann der erzeugte Überdruck im Kraftstofftanksystem gut vom Steuergerät anhand der Leistungsaufnahme der Radialpumpe kontrolliert werden.

Bei einer Ausgestaltung der Erfindung ist das Speicherelement als Aktivkohlefilter ausgebildet. Aktivkohle kann, besonders in granularer Ausbildung, Kohlenwasserstoffe gut anlagern und damit zwischenspeichern.

Bei einer Weiterbildung der Erfindung ist im Kraftstoffsystem ein Drucksensor angeordnet. Mit dem Drucksensor kann die Dichtheit des Kraftstofftanksystems leicht geprüft werden.

Eine vorteilhafte Ausführungsform der Erfindung wird anhand der Figuren beschrieben.
- Figur 1: zeigt einen Verbrennungsmotor mit einem erfindungsgemäßen Kraftstofftanksystem.
- Figur 2: zeigt eine erste Stellung des Ventilzylinders,
- Figur 3: zeigt eine zweite Stellung des Ventilzylinders,
- Figur 4: zeigt eine dritte Stellung des Ventilzylinders,
- Figur 5: zeigt eine vierte Stellung des Ventilzylinders.

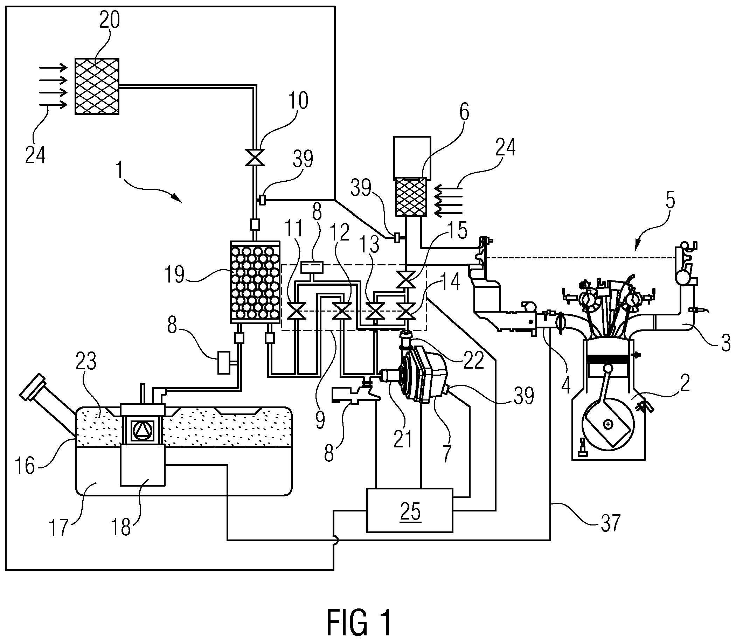

Figur 1 zeigt einen Verbrennungsmotor 2 mit einem erfindungsgemäßen Kraftstofftanksystem 1. Der Verbrennungsmotor 2 weist einen Abgasstrang 3 und einen Ansaugstrang 4 auf. Zur Rückgewinnung der im Abgas enthaltenen kinetischen Energie ist der Abgasstrang mit einem Turbolader ausgestattet, der die Ansaugluft im Ansaugstrang 4 komprimieren kann. Der Verbrennungsmotor 2 wird über den Ansaugstrang 4 mit Frischluft 24 versorgt. Ausgehend von der Frischluftseite wird Frischluft 24 über einen Luftfilter 6 in den Ansaugstrang 4 geführt und eventuell mit dem Abgasturbolader 5 oder einem Kompressor verdichtet und dann den Brennkammern des Verbrennungsmotors 2 zugeführt. Darüber hinaus wird dem Verbrennungsmotor 1 Kraftstoff 17 aus dem Kraftstofftank 16 über eine Kraftstoffleitung 37 zugeführt.

Figur 1 zeigt weiterhin das Kraftstofftanksystem 1 mit dem Kraftstofftank 16 und einem Speicherelement 19 zur temporären Speicherung von Kohlenwasserstoffen 23. Der Kraftstofftank 16 und das Speicherelement 19 sind derart miteinander verbunden, dass die Kohlenwasserstoffe 23, die aus einem im Kraftstofftank 16 befindlichen Kraftstoff 17 ausgasen, in dem Speicherelement 19 eingespeichert werden können. Das Speicherelement 19 kann beispielsweise als Aktivkohlespeicher ausgebildet sein. Ein Aktivkohlespeicher ist ein geschlossener Kanister, in dem meist granularer Kohlenstoff derart angeordnet ist, dass sich an dem Kohlenstoff die zu speichernden Kohlenwasserstoffe 23 anlagern. Das Speicherelement 19 hat jedoch nur eine begrenzte Speicherkapazität, so dass das Speicherelement 19 regelmäßig entleert werden muss, indem Frischluft 24 z. B. über einen Spülluftfilter 20 angesaugt wird und über eine Leitung mithilfe einer Spülluftpumpe 7 in das Speicherelement 19 gesaugt oder gedrückt wird. Die Frischluft 24 durchströmt die Aktivkohle in dem Speicherelement 19 und nimmt dabei Kohlenwasserstoffe 23 auf, wonach die mit den Kohlenwasserstoffen 23 angereicherte Frischluft 20 entlang weiterer Leitungen zu dem Ansaugstrang 4 gefördert wird. In dem Ansaugstrang 4 vermischt sich die mit den Kohlenwasserstoffen 23 angereicherte Frischluft 24 mit der Frischluft 24, die über den Luftfilter 6 angesaugt wird. Damit können die Kohlenwasserstoffe 23 dem Verbrennungsmotor 1 zugeführt werden, wo die Kohlenwasserstoffe 23 in den Brennkammern des Verbrennungsmotors 2 verbrannt werden. Da das Kraftstofftanksystem 1 leicht flüchtige Kohlenwasserstoffe 24 beinhaltet, ist es notwendig, die Dichtheit des gesamten Kraftstofftanksystems 1 regelmäßig zu überprüfen.

Ein wesentlicher Bestandteil des in Figur 1 gezeigten Kraftstofftanksystems 1 ist die Ventileinheit 9. In diesem Beispiel besteht die Ventileinheit 9 aus einem ersten Ventil 11, einem zweiten Ventil 12, einem dritten Ventil 13, einem vierten Ventil 14 und einem fünften Ventil 15. Das fünfte Ventil 15 dient zusammen mit dem Spülluftventil 10 zur kompletten Abdichtung des Kraftstofftanksystems 1. Wenn also das fünfte Ventil 15 und das Spülluftventil 10 geschlossen sind, und im Kraftstofftanksystem keine Leckage vorhanden ist, wird der im Kraftstofftanksystem 1 beim Schließen des fünften Ventils 15 und des Spülluftventils 10 vorhandene Druck konstant aufrechterhalten, bis eines dieser Ventile wieder geöffnet wird. Dieser konstante Druck kann von dem Drucksensor 8 erfasst und mit dem Steuergerät 25 überwacht werden. Das erste Ventil 11, das zweite Ventil 12, das dritte Ventil 13 und das vierte Ventil 14, welche Bestandteile der Ventileinheit 9 sind, dienen dazu, die Förderrichtung der Frischluft 24 umzukehren, wodurch zum einen Fristluft 24 von der Spülluftpumpe 7 in die Richtung des Verbrennungsmotors 2 förderbar ist, und zum anderen Frischluft 24 von der Spülluftpumpe 7 in den Kraftstofftank 16 förderbar ist. Zum Spülen des Speicherelementes 19 ist das Spülluftventil 10 geöffnet, und in der Ventileinheit 9 sind das zweite Ventil 12 und das vierte Ventil 14 sowie das fünfte Ventil 15 geöffnet. Das erste Ventil 11 in der Ventileinheit 9 und das dritte Ventil 13 in der Ventileinheit 9 sind geschlossen. Wird nun die Spülluftpumpe 7, die als Radialpumpe ausgebildet ist und damit das zu pumpende Medium nur von der Saugseite 21 zur Druckseite 22 fördern kann, betrieben, dann erfolgt eine Frischluftzufuhr vom Spülluftfilter 20 über das Spülluftventil 10 durch das Speicherelement 19 hin zum Ansaugstrang 4 des Verbrennungsmotors 2. In dieser Konfiguration wird also das Speicherelement 19, das als Aktivkohlefilter ausgebildet sein kann, mit Frischluft 24 gespült, wobei die im Speicherelement 19 eingelagerten Kohlenwasserstoffe 23 ausgespült werden und dem Verbrennungsmotor 2 zugeführt werden. Wenn das Speicherelement 19 nicht gespült werden muss, weil es zum Beispiel nur wenig mit Kohlenwasserstoffen 23 beladen ist, kann das Spülluftventil 10 geschlossen werden. Darüber hinaus kann auch das zweite Ventil 12 und das vierte Ventil 14 in der Ventileinheit 9 geschlossen werden. Zunächst bleibt das fünfte Ventil 15 geöffnet. Wird nun die Spülluftpumpe 7 betrieben, wird Fristluft 24 über den Luftfilter 6 angesaugt und in Richtung des Speicherelementes 19 und des Kraftstofftanks 17 gepresst. Damit erfolgt eine kontrollierte Druckerhöhung im Kraftstofftanksystem 1. Die Druckerhöhung im Kraftstofftanksystem 1 kann über den Drucksensor 8 und/oder die Drehzahl bzw. Leistungsaufnahme der Spülluftpumpe 7 kontrolliert werden. Sowohl der Drucksensor 8 als auch die Spülluftpumpe 7 sind hierzu mit einem elektronischen Steuergerät 25 verbunden. Auch die Steuerung aller genannten Ventile 10, 11, 12, 13, 14, 15 kann durch das Steuergerät 25 erfolgen, Zudem kann mindestens ein Temperatursensor 39 mit dem Steuergerät verbunden sein. Wenn nun das Kraftstofftanksystem mit einem vorbestimmten Druck beaufschlagt ist, kann das fünfte Ventil 15 abgesperrt werden, wodurch der im Kraftstofftanksystem 1 aufgebaute Druck konstant bleibt, solange im Kraftstofftanksystem 1 keine Leckage vorhanden ist. Mit dem hier beschriebenen Kraftstofftanksystem 1 kann während des normalen Betriebes eines Kraftfahrzeuges die Dichtheit des Kraftstofftanksystems 1 regelmäßig überprüft werden, was eine wichtige Anforderung aus den Vorschriften zum Schutz der Umwelt und Atmosphäre ist.

Durch die Ventileinheit 9 kann die Radialpumpe 7, die auf Grund ihrer Bauweise das zu fördernde Medium nur in einer Richtung, und zwar von der Saugseite 21 zur Druckseite 22 fördern kann, sowohl zum Spülen des Speicherelementes 19 als auch zur Druckbeaufschlagung des Kraftstofftanksystems 1 genutzt werden. Die recht einfache und langlebige sowie kostengünstige Radialpumpe 7, die als Spülluftpumpe eingesetzt wird, kann im Zusammenwirken mit der Ventileinheit 9 eine Doppelfunktion erfüllen, was das gesamte Kraftstofftanksystem sowohl kostengünstig als auch effizient gestaltet.

Mit Hilfe der Temperatursensoren 39, die an verschiedenen Stellen des Kraftstofftanksystems 1 angeordnet sein können, kann ein Zusammenhang zwischen dem von der Radialpumpe 7 erzeugten Druck und der Drehzahl, mit der sie angetrieben wird, bzw. mit der Leistung, die sie aufnimmt, hergestellt werden. Damit kann der erzeugte Überdruck im Kraftstofftanksystem 1 gut vom Steuergerät 25 anhand der Leistungsaufnahme der Radialpumpe 7 kontrolliert werden.

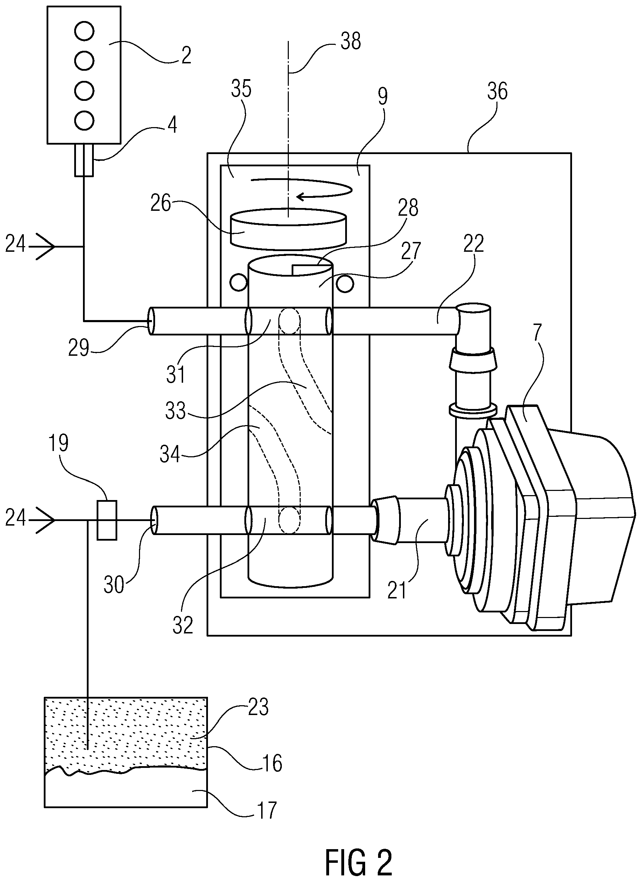

Eine Ausgestaltung der Ventileinheit 9 wird in den Figuren 2 bis 4 beschrieben. Die Ventileinheit 9 weist ein Verstellelement 27 und einen ersten bis sechsten Verstellelementdurchgang (31, 32, 33, 34, 40, 41) auf. Das Verstellelement 27 kann zum Beispiel als Linearschieber, der in der Ventileinheit 9 beweglich gelagert ist, ausgebildet sein, wobei der Linearschieber sechs Bohrungen aufweist, die den ersten bis sechsten Verstellelementdurchgang (31, 32, 33, 34, 40, 41) bilden. Im folgenden Beispiel wird die Erfindung anhand einer Ventileinheit 27 erläutert, bei der das Verstellelement 27 als Ventilzylinder ausgebildet ist, wobei der erste bis sechste Verstellelementdurchgang (31, 32, 33, 34, 40, 41) als erster bis sechster Ventilzylinderdurchgang ausgebildet sind.

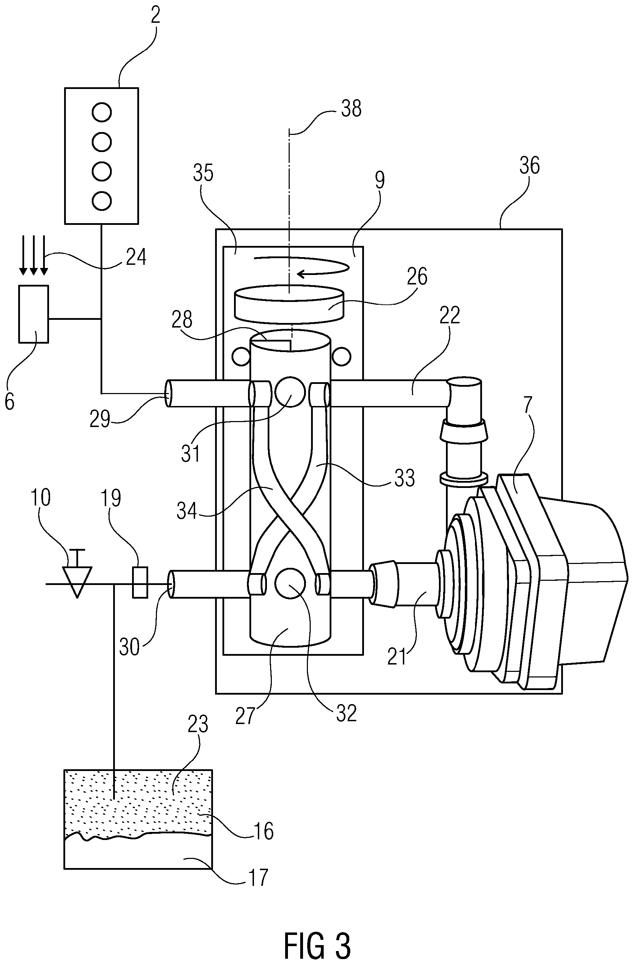

In Figur 2 ist die Spülluftpumpe 7 zu erkennen, die an ihrer Saugseite 21 und an ihrer Druckseite 22 mit der Ventileinheit 9 verbunden ist. In dieser und den folgenden Figuren können die Spülluftpumpe 7 und die Ventileinheit 9, wie schon in Figur 1 dargestellt, mit einem Steuergerät 25 elektrisch verbunden sein. Das Steuergerät 25 kann zum Beispiel den Ventilzylinder 27 in verschiedene Stellungen bewegen. Der Ventilzylinder 27 in Figur 2 befindet sich in einer ersten Stellung, und er ist mit einem ersten Ventilzylinderdurchgang 31 und mit einem zweiten Ventilzylinderdurchgang 32 ausgestattet. Der erste bis sechste Ventilzylinderdurchgang sind dazu bestimmt Luft oder ein Luft-Kohlenwasserstoffgemisch durch den Ventilzylinder 27 zu leiten. Mit dem Ventilantrieb 26 kann der Ventilzylinder 27 um eine Rotationsachse 38 in die erste Stellung gedreht werden. Die erste Stellung des Ventilzylinders 27, in der der erste Ventilzylinderdurchgang 31 die Druckseite 22 der Spülluftpumpe 7 mit der ersten Leitung 29, die zum Verbrennungsmotor 2 führt, verbindet, ist mit der Zylinderstellungsmarkierung 28 gekennzeichnet. In dieser ersten Stellung ist auch die Saugseite 21 mittels des zweiten Ventilzylinderdurchganges 32 mit der zweiten Leitung 30 verbunden, die über das Speicherelement 19 hin zum Kraftstofftank 16 führt. In dieser ersten Stellung des Ventilzylinders 27 kann ein Spülen des Speicherelementes 19 erfolgen, da Frischluft 24 über die zweite Leitung 30 angesaugt wird, wobei sie das Speicherelement 19 passiert und über die Saugseite 21 durch die Spülluftpumpe 7 zur Druckseite 22 befördert wird und dann den Weg über den ersten Ventilzylinderdurchgang 31 und die erste Leitung 29 hin zum Ansaugstrang 4 des Verbrennungsmotors 2 nimmt. Die Ventileinheit 9 weist ein Ventilgehäuse 35 auf, in dem der Ventilzylinder 27 gelagert ist. Der Ventilzylinder 27 kann über einen Ventilantrieb 26 um eine Rotationsachse 38 gedreht werden. Mit der Drehung des Ventilzylinders 27 um die Rotationsachse 38 mit Hilfe des Ventilantriebs 26, der als Elektromotor ausgebildet sein kann, kann die Ventileinheit 9 die Förderrichtung der Frischluft 24 umkehren, wodurch die Frischluft 24 nicht mehr von der Spülluftpumpe 7 in Richtung des Verbrennungsmotors 2 gefördert wird, sondern Frischluft 24 von der Spülluftpumpe 7 in den Kraftstofftank gefördert wird. Diese Situation wird in Figur 3 dargestellt.

In Figur 3 ist der Ventilzylinder 27 um 180 Grad um die Rotationsachse 38 in seine zweite Stellung gedreht, was durch die Zylinderstellungsmarkierung 28 erkennbar ist. Nun sind weder der erste Ventilzylinderdurchgang 31 noch der zweite Ventilzylinderdurchgang 32 mit der Saugseite 21 oder der Druckseite 22 der Spülluftpumpe 7 verbunden. Hingegen sind ein dritter Ventilzylinderdurchgang 33 und ein vierter Ventilzylinderdurchgang 34 mit der Saugseite 21 bzw. der Druckseite 22 verbunden. Wenn nun die Spülluftpumpe 7 in Betrieb gesetzt wird, wird Frischluft 24 über den Luftfilter 6 angesaugt und über die erste Leitung 29, die mit dem vierten Ventilzylinderdurchgang 34 verbunden ist, hin zur Saugseite 21 der Spülluftpumpe 7 befördert. Die Spülluftpumpe 7 drückt diese Frischluft 24 dann über die Druckseite 22 und den dritten Ventilzylinderdurchgang 33 hin zur zweiten Leitung 30, womit im Kraftstofftanksystem 1, also im Kraftstofftank 16 selber, sowie in dem Speicherelement 19 und den anliegenden Leitungen ein Druck aufgebaut wird. Dazu muss selbstverständlich das Spülluftventil 10 geschlossen sein. Wenn nun ein ausreichender Druck im Kraftstofftanksystem 1 durch die Spülluftpumpe 7 aufgebaut wurde, kann der Ventilzylinder 27 zum Beispiel um weitere 90 Grad um die Rotationsachse 38 vom Ventilantrieb 26 weitergedreht werden, wodurch weder der erste Ventilzylinderdurchgang 31 noch der zweite Ventilzylinderdurchgang 32 noch der dritte Ventilzylinderdurchgang 33 noch der vierte Ventilzylinderdurchgang 34 mit der Saugseite 21 oder der Druckseite 22 bzw. der ersten Leitung 29 oder der zweiten Leitung 30 verbunden sind. In dieser Stellung des Ventilzylinders 27 ist das gesamte Kraftstofftanksystem 1 druckdicht verschlossen, solange kein Leck im Kraftstofftanksystem 1 vorhanden ist.

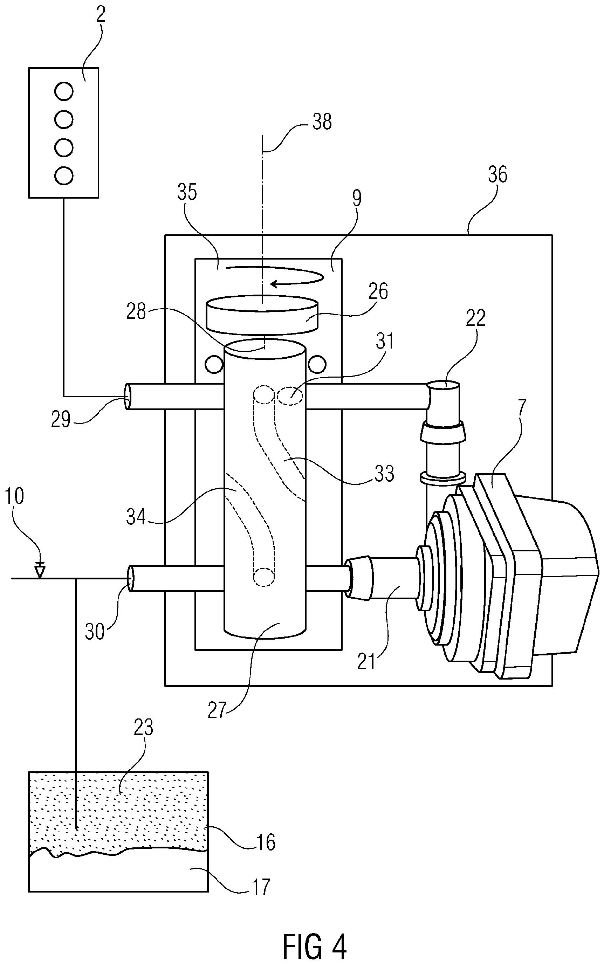

Die in Figur 4 gezeigte dritte Stellung des Ventilzylinders 27 stellt damit eine mögliche Realisierung des geschlossen fünften Ventils 15 aus Figur 1 dar. Wenn das gesamte Kraftstofftanksystem 1 mit einem Druck beaufschlagt wurde und durch die in Figur 4 dargestellte Stellung des Ventilzylinders 27 sowie ein geschlossenes Spülluftventil 10 druckdicht abgeschlossen ist, kann mit Hilfe des Drucksensors 8 überprüft werden, ob der im Kraftstofftanksystem 1 vorhandene Druck abfällt, was auf eine Leckage im Kraftstofftanksystem 1 hinweisen würde. Dies ist eine wichtige Kontrollfunktion für moderne Kraftstofftanksysteme 1, um das unkontrollierte Entweichen von Kohlenwasserstoffen 23 aus dem Kraftstofftanksystem 1 zu verhindern.

Die Spülluftpumpe 7 und die Ventileinheit 9 können in einem gemeinsamen Gehäuse 36 ausgebildet werden, wodurch das System aus Spülluftpumpe 7 und die Ventileinheit 9 leicht hermetisch abgeschlossen werden kann. Dadurch kann ein Entweichen von Kohlenwasserstoffen 23 aus dem System aus Spülluftpumpe 7 und Ventileinheit 9 effektiv verhindert werden.

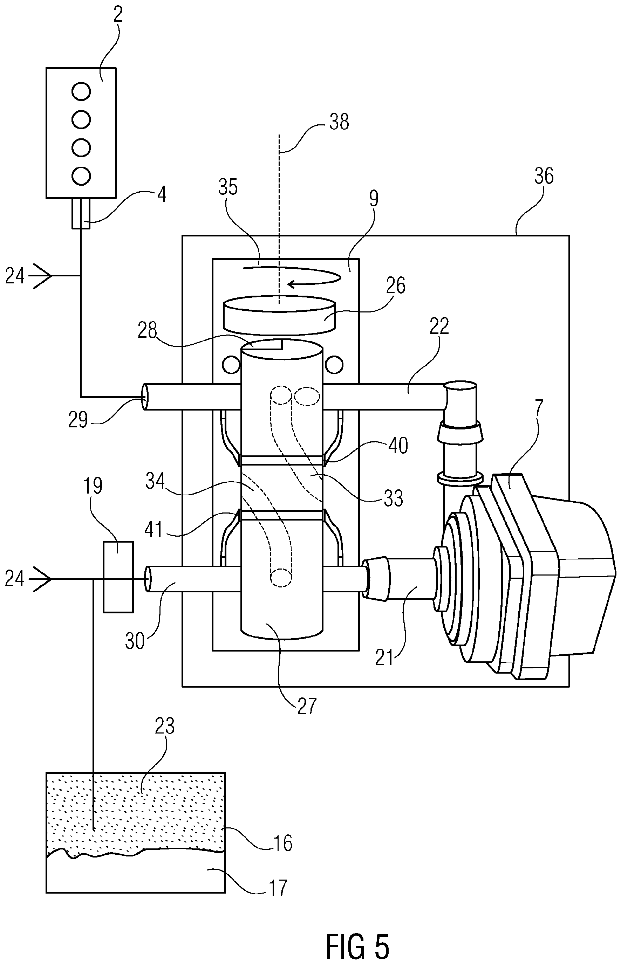

Figur 5 zeigt eine vierte Stellung des Ventilzylinders 27. Die vierte Stellung des Ventilzylinders 27 ist an der Orientierung der Zylinderstellungsmarkierung 28 zu erkennen. Der Ventilzylinder 27 weist neben dem ersten Ventilzylinderdurchgang 31, dem zweiten Ventilzylinderdurchgang 32, dem dritten Ventilzylinderdurchgang 33 und dem vierten Ventilzylinderdurchgang 34 einen fünften Ventilzylinderdurchgang 40 und einen sechsten Ventilzylinderdurchgang 41 auf. Die Strömungsquerschnitte des fünften Ventilzylinderdurchgangs 40 und des sechsten Ventilzylinderdurchgangs 41 sind kleiner als die Strömungsquerschnitte des ersten Ventilzylinderdurchgangs 31 und des zweiten Ventilzylinderdurchgangs 32, was in der Figur 5 deutlich zu erkennen ist.

In der vierten Stellung des Ventilzylinders 27 verbindet der fünfte Ventilzylinderdurchgang 40 die Druckseite 22 der Spülluftpumpe 7 mit der ersten Leitung 29. Weiterhin verbindet der sechste Ventilzylinderdurchgang 41 die Saugseite 21 der Spülluftpumpe 7 mit einer zweiten Leitung 30, wenn nun die Spülluftpumpe 7 angetrieben wird, kann Frischluft 24 durch das Speicherelement 19 angesaugt werden und über die zweite Leitung und den sechsten Ventilzylinderdurchgang 41 hin zur Spülluftpumpe 7 gefördert werden. Dabei werden Kohlenwasserstoffe 23 aus dem Speicherelement 19 gelöst und von der Spülluftpumpe 7 über die Druckseite 22 und den fünften Ventilzylinderdurchgang 40 hin zur ersten Leitung 29 gefördert, die wiederum mit dem Ansaugtrakt 4 des Verbrennungsmotors 2 verbunden ist. Durch den geringeren Strömungsquerschnitt des fünften Ventilzylinderdurchgangs 40 und des sechsten Ventilzylinderdurchgangs 41 kann das Speicherelement 19 mit einer sehr niedrigen Spülrate gespült werden. Durch den geringeren Strömungsquerschnitt im fünften Ventilzylinderdurchgang 40 und im sechsten Ventilzylinderdurchgang 41 kann die Spülluftpumpe 7 sehr gut bei niedrigen Spülraten geregelt werden, womit sehr kleine Volumenströme hergestellt werden können, was zu einer sehr effizienten Spülung des Speicherelements 19 führt.

## Patentansprüche

1. Ventileinheit (9) mit Spülluftpumpe (7) zur Verwendung in einem Kraftstofftanksystem (1) eines Verbrennungsmotors (2) mit einem Kraftstofftank (16) und einem Speicherelement (19) zur temporären Speicherung von Kohlenwasserstoffen (23), wobei der Kraftstofftank (16) und das Speicherelement (19) derart miteinander verbunden sind, dass die Kohlenwasserstoffe (23), die aus einem im Kraftstofftank (16) befindlichen Kraftstoff (17) ausgasen, in dem Speicherelement (19) eingespeichert werden, wobei das Speicherelement (19) mit der Spülluftpumpe (7), die eine Saugseite (21) und eine Druckseite (22) aufweist, verbunden ist, wobei mit der Spülluftpumpe (7) Frischluft (24) zu dem Speicherelement (19) förderbar ist, wodurch die Kohlenwasserstoffe (23) aus dem Speicherelement (19) ausgelöst und dem Verbrennungsmotor (2) zur Verbrennung zuführt werden, **dadurch gekennzeichnet, dass** die Ventileinheit (9) ein Verstellelement (27) aufweist, das beweglich in der Ventileinheit (9) gelagert ist, wobei die Ventileinheit (9) dazu ausgebildet ist, derart mit der Spülluftpumpe (7) verbunden zu werden, dass in einer ersten Stellung des Verstellelementes (27) ein erster Verstellelementdurchgang (31) die Druckseite (22) der Spülluftpumpe (7) mit einer zum Verbrennungsmotor (2) führenden ersten Leitung (29) verbindet, und ein zweiter Verstellelementdurchgang (32) die Saugseite (21) der Spülluftpumpe (7) mit einer über das Speicherelement (19) hin zum Kraftstofftank (16) führenden zweiten Leitung (30) verbindet, und dass in einer zweiten Stellung des Verstellelementes (27) ein dritter Verstellelementdurchgang (33) die Druckseite (22) der Spülluftpumpe (7) mit der zweiten Leitung (30) verbindet, und ein vierter Verstellelementdurchgang (34) die Saugseite (21) der Spülluftpumpe (7) mit der ersten Leitung (29) verbindet.

2. Ventileinheit (9) mit Spülluftpumpe (7) nach Anspruch 1, **dadurch gekennzeichnet, dass** in einer dritten Stellung des Verstellelementes (27) das Verstellelement (27) die Saugseite (21) und die Druckseite (22) der Spülluftpumpe (7) von der ersten Leitung (29) und/oder der zweiten Leitung (30) trennt.

3. Ventileinheit (9) mit Spülluftpumpe (7) nach Anspruch 1 oder 2, **dadurch gekennzeichnet, dass** das Verstellelement (27) einen fünften Verstellelementdurchgang (40) und einen sechsten Verstellelementdurchgang (41) aufweist, wobei die Querschnitte des fünften Verstellelementdurchgangs (40) und des sechsten Verstellelementdurchgangs (41) kleiner als die Querschnitte des ersten Verstellelementdurchgangs (31) und des zweiten Verstellelementdurchgangs (32) sind.

4. Ventileinheit (9) mit Spülluftpumpe (7) nach Anspruch 3, **dadurch gekennzeichnet, dass** in einer vierten Stellung des Verstellelementes (27) der fünfte Verstellelementdurchgang (40) die Druckseite (22) der Spülluftpumpe (7) mit einer ersten Leitung (29) verbindet, und ein sechste Verstellelementdurchgang (41) die Saugseite (21) der Spülluftpumpe (7) mit einer zweiten Leitung (30) verbindet.

5. Ventileinheit (9) mit Spülluftpumpe (7) nach einem der vorhergehenden Ansprüche, **dadurch gekennzeichnet, dass** die Spülluftpumpe (7) als Radialpumpe ausgebildet ist.

6. Ventileinheit (9) mit Spülluftpumpe (7) nach einem der vorhergehenden Ansprüche, **dadurch gekennzeichnet, dass** das Speicherelement (19) als Aktivkohlefilter ausgebildet ist.

7. Ventileinheit (9) mit Spülluftpumpe (7) nach einem der vorhergehenden Ansprüche, **dadurch gekennzeichnet, dass** im Kraftstofftanksystem (1) ein Drucksensor (8) angeordnet ist.

## Claims

1. Valve unit (9) with a purge air pump (7) for use in a fuel tank system (1) of an internal combustion engine (2) with a fuel tank (16) and a storage element (19) for temporary storage of hydrocarbons (23), wherein the fuel tank (16) and the storage element (19) are connected together such that the hydrocarbons (23), which gasify out of a fuel (17) present in the fuel tank (16), are stored in the storage element (19), wherein the storage element (19) is connected to the purge air pump (7) which has a suction side (21) and a pressure side (22), wherein fresh air (24) can be conveyed to the storage element (19) by the purge air pump (7), whereby the hydrocarbons (23) are released from the storage element (19) and supplied to the internal combustion engine (2) for combustion, **characterized in that** the valve unit (9) has an adjustment element (27) which is mounted movably in the valve unit (9), wherein the valve unit (9) is designed to be connected to the purge air pump (7) such that in a first position of the adjustment element (27), a first adjustment element passage (31) connects the pressure side (22) of the purge air pump (7) to a first line (29) leading to the internal combustion engine (2) and a second adjustment element passage (32) connects the suction side (21) of the purge air pump (7) to a second line (30) leading via the storage element (19) toward the fuel tank (16), and that in a second position of the adjustment element (27), a third adjustment element passage (33) connects the pressure side (22) of the purge air pump (7) to the second line (30) and a fourth adjustment element passage (34) connects the suction side (21) of the purge air pump (7) to the first line (29).

2. Valve unit (9) with purge air pump (7) according to Claim 1, **characterized in that** in a third position of the adjustment element (27), the adjustment element (27) separates the suction side (21) and the pressure side (22) of the purge air pump (7) from the first line (29) and/or from the second line (30).

3. Valve unit (9) with purge air pump (7) according to Claim 1 or 2, **characterized in that** the adjustment element (27) has a fifth adjustment element passage (40) and a sixth adjustment element passage (41), wherein the cross-sections of the fifth adjustment element passage (40) and the sixth adjustment element passage (41) are smaller than the cross-sections of the first adjustment element passage (31) and the second adjustment element passage (32).

4. Valve unit (9) with purge air pump (7) according to Claim 3, **characterized in that** in a fourth position of the adjustment element (27), the fifth adjustment element passage (40) connects the pressure side (22) of the purge air pump (7) to a first line (29), and a sixth adjustment element passage (41) connects the suction side (21) of the purge air pump (7) to a second line (30).

5. Valve unit (9) with purge air pump (7) according to any of the preceding claims, **characterized in that** the purge air pump (7) is configured as a radial pump.

6. Valve unit (9) with purge air pump (7) according to any of the preceding claims, **characterized in that** the storage element (19) is configured as an active charcoal filter.

7. Valve unit (9) with purge air pump (7) according to any of the preceding claims, **characterized in that** a pressure sensor (8) is arranged in the fuel tank system (1).

## Revendications

1. Unité de soupape (9) comportant une pompe à air de purge (7) à utiliser dans un système de réservoir de carburant (1) d'un moteur à combustion interne (2) avec un réservoir de carburant (16) et un élément de stockage (19) pour le stockage temporaire d'hydrocarbures (23), dans laquelle le réservoir de carburant (16) et l'élément de stockage (19) sont reliés l'un à l'autre de telle manière que les hydrocarbures (23), qui se vaporisent à partir d'un carburant (17) contenu dans le réservoir de carburant (16), soient accumulés dans l'élément de stockage (19), dans laquelle l'élément de stockage (19) est relié à la pompe à air de purge (7), qui présente un côté d'aspiration (21) et un côté de refoulement (22), dans laquelle de l'air frais (24) peut être fourni à l'élément de stockage (19) avec la pompe à air de purge (7), permettant ainsi de chasser les hydrocarbures (23) hors de l'élément de stockage (19) et de les envoyer au moteur à combustion interne (2) pour la combustion, **caractérisée en ce que** l'unité de soupape (9) présente un élément de réglage (27), qui est monté de façon mobile dans l'unité de soupape (9), dans laquelle l'unité de soupape (9) est configurée de façon à être reliée à la pompe à air de purge (7) d'une manière telle que dans une première position de l'élément de réglage (27) un premier passage de l'élément de réglage (31) relie le côté de refoulement (22) de la pompe à air de purge (7) à une première conduite (29) conduisant au moteur à combustion interne (2), et qu'un deuxième passage de l'élément de réglage (32) relie le côté d'aspiration (21) de la pompe à air de purge (7) à une deuxième conduite (30) conduisant vers le réservoir de carburant (16) via l'élément de stockage (19), et que dans une deuxième position de l'élément de réglage (27) un troisième passage de l'élément de réglage (33) relie le côté de refoulement (22) de la pompe à air de purge (7) à la deuxième conduite (30), et qu'un quatrième passage de l'élément de réglage (34) relie le côté d'aspiration (21) de la pompe à air de purge (7) à la première conduite (29).

2. Unité de soupape (9) comportant une pompe à air de purge (7) selon la revendication 1, **caractérisée en ce que** dans une troisième position de l'élément de réglage (27) l'élément de réglage (27) sépare le côté d'aspiration (21) et le côté de refoulement (22) de la pompe à air de purge (7) de la première conduite (29) et/ou de la deuxième conduite (30).

3. Unité de soupape (9) comportant une pompe à air de purge (7) selon la revendication 1 ou 2, **caractérisée en ce que** l'élément de réglage (27) présente un cinquième passage de l'élément de réglage (40) et un sixième passage de l'élément de réglage (41), dans laquelle les sections transversales du cinquième passage de l'élément de réglage (40) et du sixième passage de l'élément de réglage (41) sont plus petites que les sections transversales du premier passage de l'élément de réglage (31) et du deuxième passage de l'élément de réglage (32).

4. Unité de soupape (9) comportant une pompe à air de purge (7) selon la revendication 3, **caractérisée en ce que** dans une quatrième position de l'élément de réglage (27) le cinquième passage de l'élément de réglage (40) relie le côté de refoulement (22) de la pompe à air de purge (7) à une première conduite (29), et un sixième passage de l'élément de réglage (41) relie le côté d'aspiration (21) de la pompe à air de purge (7) à une deuxième conduite (30).

5. Unité de soupape (9) comportant une pompe à air de purge (7) selon l'une quelconque des revendications précédentes, **caractérisée en ce que** la pompe à air de purge (7) est une pompe radiale.

6. Unité de soupape (9) comportant une pompe à air de purge (7) selon l'une quelconque des revendications précédentes, **caractérisée en ce que** l'élément de stockage (19) est un filtre à charbon actif.

7. Unité de soupape (9) comportant une pompe à air de purge (7) selon l'une quelconque des revendications précédentes, **caractérisée en ce qu'**un capteur de pression (8) est disposé dans le système de réservoir de carburant (1).
